# EUROPÄISCHE PATENTSCHRIFT

(11) **EP 1 599 273 B1**
(45) Veröffentlichungstag und Bekanntmachung des Hinweises auf die Patenterteilung: **06.12.2006**
(21) Anmeldenummer: 04717077.4
(22) Anmeldetag: 04.03.2004
(51) Int. Cl.: B01D 35/30

(54) **ÖLFILTERANORDNUNG**
OIL FILTER ARRANGEMENT
DISPOSITIF DE FILTRE HUILE

(30) Priorität: 05.03.2003 DE 10309442
(43) Veröffentlichungstag der Anmeldung: 30.11.2005
(73) Patentinhaber: Joma-Polytec Kunststofftechnik GmbH, 72411 Bodelshausen (DE)
(72) Erfinder: JUNGMANN, Peter, 72414 Rangendingen (DE)
(74) Vertreter: Bulling, Alexander
(86) Internationale Anmeldenummer: PCT/EP2004/002167
(87) Internationale Veröffentlichungsnummer: WO 2004/078317

(56) Entgegenhaltungen:
- DE-A- 3 409 219
- DE-A- 19 523 239
- US-A- 4 423 751

## Beschreibung

Die Erfindung betrifft eine Ölfilteranordnung mit einem Gehäuse, das einen Aufnahmeraum für ein in das Gehäuse einsetzbares Filterelement aufweist, und mit einem den Aufnahmeraum verschließenden Gehäusedeckel, wobei das Filterelement in radialer Richtung von ungefiltertem Rohöl durchströmbar ist und an seiner in Einbaulage unteren Stirnseite eine Ablauföffnung für gefiltertes Öl aufweist, wobei das Filterelement an der unteren Stirnseite gegen den Aufnahmeraum und das Gehäuse abgedichtet ist.

Eine gattungsgemäße Ölfilteranordnung ist bekannt aus der DE 34 09 219 C2. Zur Abdichtung an der oberen Stirnseite des Filterelements ist ein Deckel vorgesehen, der auch zum Verschließen des Aufnahmeraums im Gehäuse dient. Der Deckel und das Filterelement sind miteinander verbunden, so dass eine Austauscheinheit gebildet wird, die dann entsorgt und durch eine neue Einheit ersetzt werden kann. Durch den beschriebenen Aufbau entsteht das Problem, dass der Deckel zwei Funktionen übernehmen muss. Zum einen muss der Deckel den Aufnahmeraum des Gehäuses zuverlässig verschließen, zum anderen muss der Deckel eine zuverlässige Abdichtung zwischen der Rohöl- und der Reinölseite des Filterelements bilden. Diese Doppelfunktion ist insofern problematisch, als dass bei den im Betrieb einer Ölfilteranordnung entstehenden Temperatur- und Öldruckschwankungen und den verwendeten Kunststoffmaterialien nicht unerhebliche Längenausdehnungen dazu führen können, dass nur eine der Dichtfunktionen zuverlässig erfüllt werden kann.

Gemäß der DE 35 38 589 wird eine im Wesentlichen der DE 34 09 219 C2 entsprechende Ölfilteranordnung vorgeschlagen, wobei der Deckel des Gehäuses und das Filterelement über eine Verklebung miteinander verbunden sind. Abgesehen davon, dass somit die gleichen Probleme hinsichtlich der zuverlässigen Dichtwirkung bestehen, weist diese Ausführung den weiteren Nachteil auf, dass eine sortenreine Entsorgung des Filterelements beziehungsweise des Deckels und eine Wiederverwendung des Deckels erschwert wird.
Gemäß der DE 39 03 675 C2 wird vorgeschlagen, die obere Stirnseite des Filterelements mit einer Endscheibe zu versehen, die eine zentrische Öffnung zur Aufnahme eines Bypass-Ventils aufweist. Die Endscheibe und das Ventil sind über eine Schnappverbindung an einem Gehäusedeckel fixierbar. Auch diese Ausführung weist hinsichtlich der Vielzahl der verwendeten Teile beziehungsweise der erforderlichen komplexen Geometrien den Nachteil auf, dass eine zuverlässige Abdichtung im Bereich der oberen Stirnseite des Filterelements über einen langen Zeitraum nur dann zu gewährleisten ist, wenn höchste Toleranzanforderungen erfüllt werden.

Auch in der EP 0 653 234 B1 wird eine solche Schnappverbindung zwischen einem zentralen Trägerteil und einem Gehäusedeckel vorgeschlagen. Zusätzlich kommt ein als Flügelmutter ausgebildeter Deckel zum Einsatz, der mit dem zentralen Trägerteil verschraubt wird und einen Teil der oberen Stirnseite des Filterelements abdeckt. Auch bei dieser Ausführungsform geht eine zuverlässige Abdichtwirkung mit einem relativ aufwendigen Aufbau und hohen Toleranzanforderungen einher.

Aus der DE 195 23 239 ist bekannt geworden, ein Filterelement bereitzustellen, dass an einer Endkappe nach radial außen weisendende, federvorgespannte Halteabschnitte aufweist, die gegen ein Gehäuse wirken. Zum Lösen des Filterelements vom Gehäuse wird dabei das Filterelement mit erhöhter Kraft in axialer Richtung aus dem Gehäuse herausgezogen.

Hiervon ausgehend ist es Aufgabe der vorliegenden Erfindung, eine Ölfilteranordnung zu schaffen, bei der eine Abdichtung des Filterelements zuverlässig und bei einfachem Aufbau erfolgt.

Diese Aufgabe wird bei einer Ölfilteranordnung mit den Merkmalen des Anspruchs 1 gelöst.

Die erfindungsgemäße Ölfilteranordnung hat den wesentlichen Vorteil, dass mit einfachen, toleranzunempfindlichen Bauteilen eine zuverlässige Abdichtung der oberen Stirnseite des Filterelements erfolgen kann. Dadurch, dass der Gehäusedeckel bei der erfindungsgemäßen Ausführung nur noch eine Dichtfunktion gegenüber dem Gehäuse erfüllen muss und die filterelementseitige Abdichtung durch die separate Abdeckung erfolgt, kann das Filterelement besonders zuverlässig abgedichtet werden. Die filterelementseitige Abdeckung dichtet die gesamte obere Stirnseite des Filterelements ab, ohne dass Öffnungen für Bypassventile oder zusätzliche Elemente vorgesehen sind, die potentielle Leckagestellen bilden können.

Die Abdeckung kann bereits bei der Herstellung des Filterelements mit diesem (beispielsweise durch Kleben) verbunden werden, es ist jedoch auch möglich, die Abdeckung erst dann vorzusehen, wenn das Filterelement bereits in den Aufnahmeraum des Gehäuses eingesetzt ist.

Erfindungsgemäß ist vorgesehen, dass auf der dem Filterelement abgewandten Seite der Abdeckung ein griffartiger Abschnitt vorgesehen ist. Hierdurch wird der Austausch des Filterelements erheblich erleichtert. Hierfür wird zunächst der Gehäusedeckel vom Gehäuse abgeschraubt.

Anschließend kann die Abdeckung an dem griffartigen Abschnitt erfasst und entfernt werden. Dabei kann der griffartige Abschnitt beispielsweise als Erhebung, Mulde oder Öse ausgebildet sein.

Ferner ist auf der dem Filterelement zugewandten Seite des Gehäusedeckels mindestens ein Hinterschnittelement vorgesehen, das bei Abschrauben des Gehäusedeckels vom Gehäuse den griffartigen Abschnitt der Abdeckung in axialer Richtung mitnimmt und so die Abdeckung aus dem Aufnahmeraum entfernt. Die Hinterschnittelemente können beispielsweise als Zungen oder Laschen ausgebildet sein, die den griffartigen Abschnitt zumindest teilweise erfassen und somit die Abdeckung bereits beim Abschrauben des Gehäusedeckels vom Gehäuse entfernt. Somit kann beim Austausch des Filterelements ein Arbeitsvorgang eingespart werden.

Es ist prinzipiell nicht erforderlich, dass die Abdeckung auf ihrer dem Gehäusedeckel zugewandten Seite an diesem anliegt, da die Abdeckung die gesamte Stirnseite des Filterelements bedeckt und somit eine Abdichtung zwischen der Rohöl- und der Reinölseite erfolgt, ohne dass der Gehäusedeckel eine Dichtfunktion übernehmen muss.

Es ist jedoch vorteilhaft, dass das Filterelement in axialer Richtung durch Anlage der Abdeckung am Gehäusedeckel und durch Anlage am Gehäuse festgelegt ist. Hierdurch kann das Filterelement im Bereich seiner oberen Stirnseite durch die Elemente Gehäusedeckel und Abdeckung sowie im Bereich der unteren Stirnseite durch das Gehäuse fixiert werden. Hierbei genügt eine relativ geringe Klemmkraft, um eine axiale Bewegung des Filterelements innerhalb des Aufnahmeraums zu verhindern.

Um eine zuverlässige Übertragung der zwischen dem Gehäusedeckel und der Abdeckung auftretenden Druckkräfte zu ermöglichen, ist es vorteilhaft, dass am Gehäusedeckel und/oder an der Abdeckung Zwischenelemente zur Übertragung von axialen und/oder radialen Anlagekräften vorgesehen sind. Diese Zwischenelemente können beispielsweise direkt an den Gehäusedeckel und/oder die Abdeckung angeformt sein, so dass diese beispielsweise durch einen Spritzgießvorgang einstückig herstellbar sind.

Nach einer vorteilhaften Ausführungsform weist der Gehäusedeckel beziehungsweise die Abdeckung Zentrier- und/oder Positionierabschnitte in Form von sich zumindest teilweise über einen Kreisumfang erstreckenden Zylinderwandabschnitten auf, deren Stirnflächen in eine an der Abdeckung beziehungsweise am Gehäusedeckel ausgebildete Ringnut greifen. Dies bedeutet, dass beispielsweise am Gehäusedeckel eine zylindrische Wand vorgesehen ist, deren Stirnfläche in eine an der Abdeckung ausgebildete Ringnut greift. Selbstverständlich können die Zylinderwandabschnitte auch an der Abdeckung vorgesehen sein und die Ringnut am oder im Gehäusedeckel. Die vorgeschlagene, rotationssymmetrische Ausbildung ist deshalb vorteilhaft, weil der Gehäusedeckel beim Aufschrauben auf das Gehäuse durch die Zylinderwandabschnitte beziehungsweise die Ringnut Druckkräfte in axialer Richtung übertragen kann, ohne dass dabei das Filterelement mit seiner Abdeckung ebenfalls eine Drehbewegung durchführt. Hierdurch werden gegebenenfalls an der unteren Stirnseite des Filterelements vorgesehene O-Ring-Dichtungen bei der Montage des Filterelements geschont.

Besonders vorteilhaft ist es, wenn die Abdeckung unlösbar mit dem Filterelement verbunden ist. Hierdurch kann das Filterelement direkt zusammen mit der Abdeckung aus dem Aufnahmeraum des Gehäuses entfernt werden, und zwar entweder durch manuelles Erfassen des griffartigen Abschnitts bei abgeschraubtem Gehäusedeckel oder, bei Anordnung von Hinterschnittelementen im Gehäusedeckel, direkt beim Abschrauben des Gehäusedeckels vom Gehäuse.

Eine Weiterbildung der Erfindung sieht vor, dass die Abdeckung auf der dem Filterelement zugewandten Seite einen Ringsteg aufweist, der das Filterelement radial außen umgreift. Hierdurch können die Abdeckung und das Filterelement im Bereich der oberen Stirnseite in radialer Richtung zueinander positioniert werden. Wenn die oben genannten Zylinderwandabschnitte beziehungsweise Ringnuten am Gehäuse beziehungsweise an der Abdeckung vorgesehen sind, ist das Filterelement über den Ringsteg und über die Ringnut beziehungsweise die Zylinderwandabschnitte konzentrisch zum Gehäusedeckel und damit konzentrisch zum Aufnahmeraum angeordnet. Somit wird eine gleichmäßige Filterwirkung unabhängig vom Eintrittsort des Rohöls in Umfangsrichtung erzeugt.

In weiterer Ausgestaltung der Erfindung ist vorgesehen, dass am Boden des Gehäuses ein Innenstutzen vorgesehen ist, der aus einem Zylinderwandabschnitt gebildet ist und in den Aufnahmeraum ragt. Die Abdichtung der unteren Stirnseite des Filterelements gegen den Aufnahmeraum erfolgt mit Hilfe eines Ringscheibenabschnitts, an den sich zur Abdichtung gegen den Innenstutzen des Gehäuses ein dem Innenstutzen des Gehäuses überdeckender Kragen anschließt. Zwischen der dem Aufnahmeraum zugewandten Stirnfläche des Zylinderwandabschnitts des Innenstutzens und dem Kragen ist eine Ringdichtung vorgesehen. Durch die Anordnung der Ringdichtung zwischen Stirnfläche des Zylinderwandabschnitts des Innenstutzens und dem Kragen wird eine zuverlässige Abdichtung des Filterelements auch an seiner unteren Stirnseite ermöglicht. Für die zuverlässige Dichtwirkung ist von Bedeutung, dass die beim Aufschrauben auf das Gehäuse auftretenden axialen Druckkräfte über den Gehäusedeckel auf die Abdeckung und über das Filterelement auf den Kragen und von diesem auf die Ringdichtung übertragen werden. Die Ringdichtung wiederum stützt sich an der Stirnfläche des Zylinderwandabschnitts des Innenstutzens des Gehäuses ab.

Nach einer anderen Weiterbildung der Erfindung sind die Abdeckung und/oder der Ringscheibenabschnitt und der sich daran anschließende Kragen und/oder ein im Inneren des Filterelements vorgesehener Kollabierschutz aus demselben Material, insbesondere aus derselben Kunststoffsorte, hergestellt. Hierdurch kann die Entsorgung beziehungsweise das Recycling des Filterelements, der Abdeckung und des Kragens erleichtert werden.

Nach einer vorteilhaften Ausgestaltung der Erfindung ist vorgesehen, dass benachbart zum Aufnahmeraum im Gehäuse ein Überdruckventil vorgesehen ist, das achsparallel zum Filterelement ausgerichtet ist. Dieses Überdruckventil dient dazu, dass bei verstopftem Filterelement gewährleistet ist, dass das für die Schmierung eines Verbrennungsmotors benötigte Öl weiterhin zur Verfügung steht, wenn auch unter Umgehung des Filterelements. Durch die achsparallele Anordnung zum Filterelement ist eine besonders einfache und automatisierbare Montage der Ölfilteranordnung möglich. Dabei können das Überdruckventil, das Filterelement sowie die Abdeckung aus der gleichen Fügerichtung in den Aufnahmeraum des Gehäuses eingeführt werden.

Besonders vorteilhaft ist es, wenn das Überdruckventil in eine Aufnahmeöffnung im Gehäuse einschweißbar ist. Hierdurch wird eine zuverlässige Verbindung zwischen dem Überdruckventil und dem Gehäuse ermöglicht und ein unbeabsichtigtes Lösen des Überdruckventils von seinem Einbauort weitestgehend verhindert.

Weiter vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine geschnittene Seitenansicht einer Ölfilteranordnung, die nicht Teil dieser Erfindung ist,
- Figur 2: eine der Figur 1 entsprechende Ansicht einer Ausführungsform der Erfindung und
- Figur 3: eine dem Schnitt III-III entsprechende Ansicht gemäß Figur 2.

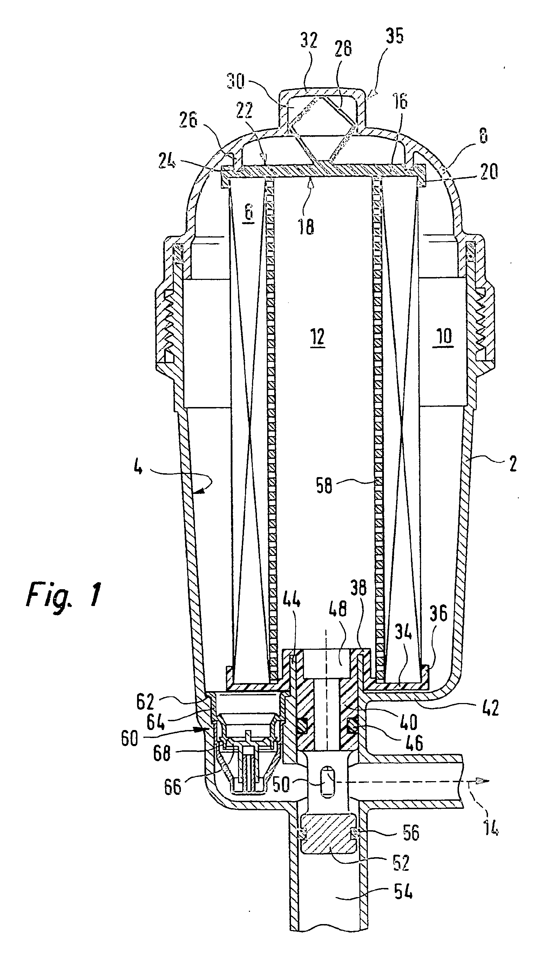

Die Figur 1 zeigt eine Ölfilteranordnung mit einem im Wesentlichen topfförmig ausgebildeten Gehäuse 2, das einen im Wesentlichen zylindrischen Aufnahmeraum 4 bildet. In den Aufnahmeraum 4 ist ein Ringfilterelement 6 eingesetzt. Der Aufnahmeraum 4 des Gehäuses 2 ist mit einem auf das Gehäuse 2 aufschraubbaren Gehäusedeckel 8 verschließbar. Das Filterelement 6 umgebend ist ein ringförmiger Raum 10 für in das Filterelement 6 eintretendes Rohöl vorgesehen. Das Rohöl durchströmt das Filterelement 6 in radialer Richtung und gelangt in einen zentrisch angeordneten Raum 12 für Reinöl. Das gefilterte Reinöl gelangt entsprechend dem gestrichelt dargestellten Verlauf zu einem Abfluss 14.

An der oberen Stirnseite des Filterelements 6 ist eine im Wesentlichen scheibenförmig ausgebildete Abdeckung 16 vorgesehen. Die Abdeckung 16 erstreckt sich über die gesamte obere Stirnseite des Filterelements 6 und ist mit diesem fest verbunden. Auf der dem Filterelement 6 zugewandten Seite 18 ist ein Ringsteg 20 vorgesehen, der das Filterelement 6 radial außen umgreift. Hierdurch sind das Filterelement 6 und die Abdeckung 16 zentrisch zueinander ausgerichtet.

Auf der dem Filterelement 6 abgewandten Seite 22 der Abdeckung 16 ist eine in Umfangsrichtung ringförmig verlaufende Nut 24 vorgesehen, in die die Stirnfläche einer an den Gehäusedeckel 8 angeformten ringbundartigen Zylinderwand 26 greift. Durch die Zylinderwand 26 beziehungsweise die Nut 24 können Axialkräfte von dem Gehäusedeckel 8 über die Zylinderwand 26 und die Nut 24 auf die Abdeckung 16 beziehungsweise das Filterelement 6 übertragen werden.

Auf der dem Filterelement 6 abgewandten Seite 22 der Abdeckung 16 ist ferner ein als Öse ausgebildeter griffartiger Abschnitt 28 vorgesehen, der als Montagehilfe bei dem Austausch des Filterelements 6 dient. Bei von dem Gehäuse 2 abgenommenem Gehäusedeckel 8 kann die Öse 28 manuell oder mit Hilfe eines Greifwerkzeugs ergriffen werden, um die Abdeckung 16 sowie das mit der Abdeckung 16 verbundene Filterelement 6 aus dem Aufnahmeraum 4 des Gehäuses 2 zu entfernen. Die Öse 28 ist in einem Innenraum 30 angeordnet, der von einem Fortsatz 32 gebildet ist, der Teil des Gehäusedeckels 8 ist. Der Fortsatz 32 weist auf seiner Außenseite 35 ein Sechskantprofil auf, auf das ein Maul- oder Ringschlüssel aufsetzbar ist, um den Gehäusedeckel 8 vom Gehäuse 2 abschrauben zu können.

An der unteren Stirnseite des Filterelements 6 ist ein Ringscheibenabschnitt 34 vorgesehen, an den radial außen ein Ringsteg 36 angeformt ist. Der Ringscheibenabschnitt 34 und der Ringsteg 36 dichten das Filterelement 6 an seiner unteren Stirnseite gegen den Aufnahmeraum 4. An den Ringscheibenabschnitt 34 schließt sich in nach radial innen gewandter Richtung ein Kragen 38 an, der wiederum an einen an der unteren Stirnseite des Filterelements 6 vorgesehenen Verschlusszapfen 40 angeformt ist. Der Kragen 38 umgibt einen am Boden 42 des Gehäuses 2 angeformten zylindrischen Innenstutzen 44. Der Innenstutzen 44 ist über einen O-Ring 46 gegen die Innenwand des Innenstutzens 44 und damit gegen das Gehäuse 2 gedichtet.

Der Verschlusszapfen 40 weist eine zentrische Bohrung 48 auf, durch die gefiltertes Reinöl aus dem Raum 12 dem Abfluss 14 zufließen kann. Hierfür sind eine oder mehrere Austrittsöffnungen 50 vorgesehen, die mit der Bohrung 48 im Verschlusszapfen 40 in Verbindung stehen.

An dem dem Filterelement 6 abgewandten Ende des Verschlusszapfens 40 ist ein Drainageverschluss 52 für eine Drainage 54 vorgesehen. Zur Abdichtung des Drainageverschlusses 52 gegenüber der Drainage 54 ist ein O-Ring 56 vorgesehen.

Die Abdeckung 16, der Verschlusszapfen 40 mit Kragen 38 und Ringscheibenabschnitt 34 sowie Ringsteg 36 sowie ein im Inneren des Filterelements 6 vorgesehener Kollabierschutz 58 sind aus derselben Kunststoffsorte hergestellt, um eine sortenreine Entsorgung beziehungsweise das Recycling der Bauteile zu erleichtern.

In den Boden 42 des Gehäuses 2 ist ein Überdruckventil 60 integriert, das sich über einen umlaufenden Kragen 62 an einem ringförmigen Aufnahmeabschnitt 64 im Gehäuse 2 abstützt und dort eingeschweißt ist. Das Überdruckventil 60 weist einen Ventilkörper 66 auf, der an einem Ventilsitz 68 anliegt.

Die dargestellte Ölfilteranordnung funktioniert im Normalbetrieb so, dass ungefiltertes Rohöl über einen nicht dargestellten Einlass in den Rohölraum 10 gelangt, von dort das Filterelement 6 von radial außen nach innen durchströmt und in den Reinölraum 12 gelangt. Von dort kann es über die in dem Verschlusszapfen 40 ausgebildete Bohrung 48 beziehungsweise die Austrittsöffnungen 50 zum Abfluss 14 gelangen. Im Laufe der Betriebsdauer des Filterelements 6 setzten sich Schmutzpartikel an diesem ab, so dass die Passage des Rohöls aus dem Raum 10 in den Raum 12 erschwert wird. Bei besonders starker Verschmutzung ist gegebenenfalls kein Durchtreten des Rohöls aus dem Raum 10 in den Raum 12 mehr möglich. Um in diesem Fall zu gewährleisten, dass eine mit der Ölfilteranordnung in Verbindung stehende Verbrennungskraftmaschine weiterhin mit Öl versorgt wird, kann das Filterelement 6 umgangen werden, indem das Überdruckventil 60 ab einem bestimmten Öldruck im Raum 10 öffnet. Dabei wird der Ventilkörper 66 entgegen der Wirkung einer nicht dargestellten Druckfeder aus seinem Ventilsitz 68 gehoben, so dass im Raum 10 befindliches Öl über das Überdruckventil 60 dem Abfluss 14 zugeleitet werden kann.

Bei einem Austausch des Filterelements 6 wird der Gehäusedeckel 8 vom Gehäuse 2 abgeschraubt. Im nächsten Schritt wird die Öse 28 ergriffen und somit die Abdeckung 16, das Filterelement 6 sowie der Innenstutzen 40 aus dem Aufnahmeraum 2 entfernt. Beim Herausziehen des Verschlusszapfens 40 wird auch der Drainageverschluss 52 aus der Drainage 54 herausgehoben, so dass im Aufnahmeraum 4 des Gehäuses 2 befindliches Öl durch die Drainage 54 abfließen kann.

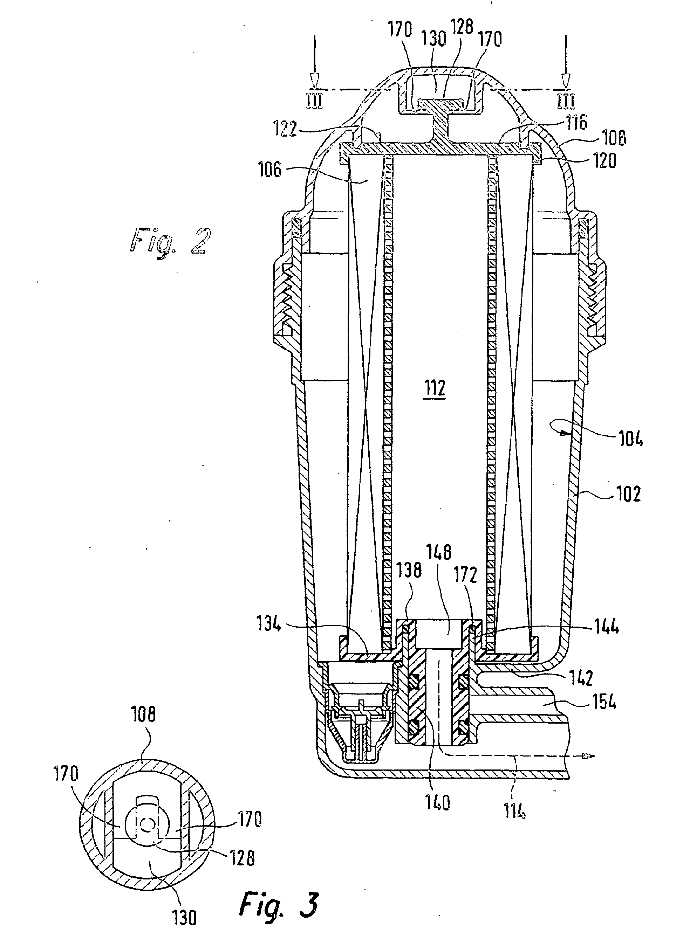

Mit weiterem Bezug auf die Figur 2 ist eine weitere Ausführungsform einer Ölfilteranordnung dargestellt. Auch diese Ölfilteranordnung weist ein Gehäuse 102 mit einem Aufnahmeraum 104 und einem Filterelement 106 auf, wobei der Aufnahmeraum 104 durch einen Gehäusedeckel 108 verschließbar ist. Die Funktionsweise der in Figur 2 dargestellten Ausführungsform der Ölfilteranordnung entspricht im Wesentlichen der Funktionsweise der in Figur 1 dargestellten Ausführungsform. Daher wird im Folgenden detailliert nur auf die Unterschiede zur Ausführungsform gemäß Figur 1 eingegangen.

An der oberen Stirnseite des Filterelements 106 ist eine Abdeckung 116 vorgesehen, an der (ähnlich zu Figur 1) ein Ringsteg 120 vorgesehen ist. Auf der dem Filterelement 106 abgewandten Seite 122 der Abdeckung 116 ist ein Griff 128 angeformt, der in einen Innenraum 130 ragt, der in einem zentralen, oberen Bereich des Gehäusedeckels 108 gebildet ist. An dem Gehäusedeckel 108 sind, den Innenraum 130 zum Filterelement 106 hin begrenzend, zungenförmige Hinterschnittelemente 170 vorgesehen. Die Hinterschnittelement 170 sind geeignet, den Griff 128 von unten her zu erfassen, um beim Abschrauben des Gehäusedeckels 108 vom Gehäuse 102 die Abdeckung 116 sowie das mit der Abdeckung 116 verbundene Filterelement 106 und einen an der unteren Seite des Filterelements 106 vorgesehenen Verschlusszapfen 140 aus dem Aufnahmeraum 104 des Gehäuses 102 zu entfernen. Nach dem Herausnehmen des Filterelements 106 aus dem Aufnahmeraum 104 kann der Griff 128 seitlich aus dem Bereich der Hinterschnittelemente 170 herausgeführt werden (siehe auch Fig. 3). Damit wird das Filterelement 106 zusammen mit seiner Abdeckung 116 vom Gehäusedeckel gelöst.

An den Verschlusszapfen 140 ist ein Kragen 138 angeformt, an den sich wiederum ein Ringscheibenabschnitt 134 anschließt, der das Filterelement 106 an seiner unteren Stirnseite gegen den Aufnahmeraum 104 abdichtet. Der Kragen 138 umgibt einen am Gehäuseboden 142 angeformten Innenstutzen 144. Der Innenstutzen 144 ist zylindrisch ausgebildet und greift in den am Verschlusszapfen 140 ausgebildeten Kragen 138. Im Unterschied zu der in Figur 1 dargestellten ersten Ausführungsform ist jedoch zwischen den Stirnflächen des Innenstutzens 144 und dem Kragen 138 eine zusätzliche O-Ring-Dichtung 172 vorgesehen. Diese O-Ring-Dichtung 172 wird über den Kragen 138, über die Ringscheibenabschnitte 134 sowie das Filterelement 106 und die Abdeckung 116 vom Deckel 108 in axialer Richtung mit Druckkraft beaufschlagt. Hierdurch wird eine zuverlässige Abdichtung zwischen dem Innenstutzen 144 des Gehäuses 2 und dem Kragen 138 des Verschlusszapfens 140 erreicht.

Bei der in der Figur 2 dargestellten Ausführungsform ist die Lage der Abfluss- beziehungsweise Drainagestellen gegenüber der in Figur 1 dargestellten Ausführungsform leicht verändert. Gefiltertes Öl gelangt aus einem Raum für Reinöl 112 durch eine Bohrung 148 im Verschlusszapfen 140 entlang des gestrichelt dargestellt und mit 114 bezeichneten Verlaufs zum Abfluss. Die Drainage 154 ist oberhalb des Abflusses 114 angeordnet. Diese Drainage 154 wird bei Entfernen des Verschlusszapfens 140 aus dem Innenstutzen 144 des Gehäuses 2 freigegeben.

## Patentansprüche

1. Ölfilteranordnung mit einem Gehäuse (102), das einen Aufnahmeraum (104) für ein in das Gehäuse (102) einsetzbares Filterelement (106) aufweist, und mit einem den Aufnahmeraum (104) verschließenden Gehäusedeckel (108), wobei das Filterelement (106) in radialer Richtung von ungefiltertem Rohöl durchströmbar ist und an seiner in Einbaulage unteren Stirnseite eine Ablauföffnung (148) für gefiltertes Öl aufweist, wobei das Filterelement an der unteren Stirnseite gegen den Aufnahmeraum (104) und das Gehäuse (102) abgedichtet ist, **dadurch gekennzeichnet dass** die gesamte obere Stirnseite des Filterelements (106) durch eine filterelementseitige, vom Deckel (108) separat ausgebildete Abdeckung (116) gegen den Aufnahmeraum (104) abgedichtet ist und dass auf der dem Filterelement (106) abgewandten Seite (122) der Abdeckung (116) ein griffartiger Abschnitt (128) und auf der dem Filterelement (106) zugewandten Seite des Gehäusedeckels (108) zungenartige Hinterschnittelemente (170) derart vorgesehen sind, dass die Hinterschnittelemente (170) beim Abschrauben des Gehäusedeckels (108) vom Gehäuse (102) den griffartigen Abschnitt (128) von unten her erfassen und in axialer Richtung mitnehmen, wobei nach dem Herausnehmen des Filterelements (106) aus dem Aufnahmeraum (104) der griffartige Abschnitt (128) seitlich aus dem Bereich der Hinterschnittelemente (170) herausführbar ist.

2. Ölfilteranordnung nach Anspruch 1, **dadurch gekennzeichnet, dass** das Filterelement (106) in axialer Richtung durch Anlage der Abdeckung (116) am Gehäusedeckel (108) und durch Anlage am Gehäuse (102) festgelegt ist.

3. Ölfilteranordnung nach Anspruch 2, **dadurch gekennzeichnet, dass** am Gehäusedeckel (108) und/oder an der Abdeckung (146) Zwischenelemente zur Übertragung von axialen und/oder radialen Anlagekräften vorgesehen sind.

4. Ölfilteranordnung nach Anspruch 3, **dadurch gekennzeichnet, dass** der Gehäusedeckel (108) beziehungsweise die Abdeckung (116) Positionier- und/oder Zentrierabschnitte aufweist, die mit an der Abdeckung (116) beziehungsweise am Gehäusedeckel (108) vorgesehenen komplementären Positionier- und/oder Zentrierabschnitten zusammenwirken.

5. Ölfilteranordnung nach Anspruch 3 oder 4, **dadurch gekennzeichnet, dass** der Gehäusedeckel (108) beziehungsweise die Abdeckung (116) sich zumindest teilweise über einen Kreisumfang erstreckende Zylinderwandabschnitte (126) aufweist, deren Stirnflächen in eine an der Abdeckung (116) beziehungsweise am Gehäusedeckel (108) ausgebildete Ringnut (116) greifen.

6. Ölfilteranordnung nach einem der vorhergehenden Ansprüche, **dadurch gekennzeichnet, dass** der griffartige Abschnitt als Erhebung (128) ausgebildet ist.

7. Ölfilteranordnung nach einem der vorhergehenden Ansprüche, **dadurch gekennzeichnet, dass** die Abdeckung (116) unlösbar mit dem Filterelement (106) verbunden ist.

8. Ölfilteranordnung nach einem der vorhergehenden Ansprüche, **dadurch gekennzeichnet, dass** die Abdeckung (116) auf der dem Filterelement (106) zugewandten Seite (118) einen Ringsteg (120) aufweist, der das Filterelement (106) radial außen umgreift.

9. Ölfilteranordnung nach einem der vorhergehenden Ansprüche, **dadurch gekennzeichnet, dass** am Boden (142) des Gehäuses (102) ein Innenstutzen (144) vorgesehen ist, der aus einem Zylinderwandabschnitt gebildet ist und in den Aufnahmeraum (104) ragt, und wobei die Abdichtung der unteren Stirnseite des Filterelements (106) gegen den Aufnahmeraum (104) mit Hilfe eines Ringscheibenabschnitts (134) erfolgt, an den sich zur Abdichtung gegen den Innenstutzen des Gehäuses ein den Innenstutzen (144) des Gehäuses (102) überdeckender Kragen (138) anschließt, wobei zwischen der dem Aufnahmeraum (104) zugewandten Stirnfläche des Zylinderwandabschnitts des Innenstutzens (144) und dem Kragen (138) eine Ringdichtung (172) vorgesehen ist.

10. Ölfilteranordnung nach Anspruch 9, **dadurch gekennzeichnet, dass** die Abdeckung (116) und/oder der Ringscheibenabschnitt (134) und der sich daran anschließende Kragen (138) und/oder ein im Inneren des Filterelements (106) vorgesehener Kollabierschutz aus demselben Material hergestellt sind.

11. Ölfilteranordnung nach einem der vorhergehenden Ansprüche, **dadurch gekennzeichnet, dass** benachbart zum Aufnahmeraum (104) im Gehäuse (102) ein Überdruckventil vorgesehen ist, das achsparallel zum Filterelement (106) ausgerichtet ist.

12. Ölfilteranordnung nach Anspruch 11, **dadurch gekennzeichnet, dass** das Überdruckventil in eine Aufnahmeöffnung im Gehäuse (102) einschweißbar ist.

## Claims

1. Oil filter arrangement having a housing (102) which has an accommodating chamber (104) for a filter element (106) insertable into the housing (102), and having a housing cover (108) which closes the accommodating chamber (104), wherein unfiltered raw oil is able to flow in the radial direction through the filter element (106) and on its end side which is lowermost in its installed position has an outlet opening (148) for filtered oil, wherein the filter element is sealed at the lowermost end side against the accommodating chamber (104) and the housing (102), **characterised in that** the whole upper end side of the filter element (106) is sealed, by a covering (116) on the filter side which is separate from the cover (108), against the accommodating chamber (104) and that on the side (122) of the covering (116) facing away from the filter element (106) a handle-like section (128) and, on the side of the housing cover (108) facing towards the filter element (106), tongue-like undercut elements (170) are provided such that, on unscrewing the housing cover (108) from the housing (102), the undercut elements (170) grasp the handle-like section (128) from beneath and carry it with them in the axial direction whereby, after removal of the filter element (106) from the accommodating chamber (104), the handle-like section (128) can be guided out of the region of the undercut elements (170).

2. Oil filter arrangement according to claim 1, **characterised in that** the filter element (106) is fixed in the axial direction by the seating of the covering (116) on the housing cover (108) and by its seating on the housing (102).

3. Oil filter arrangement according to claim 2, **characterised in that** intermediate elements are provided on the housing cover (108) and/or on the covering (116) for transmitting axial and/or radial seating forces.

4. Oil filter arrangement according to claim 3, **characterised in that** the housing cover (108) or the covering (116) has positioning and/or centring sections which cooperate with complementary positioning and/or centring sections provided on the covering (116) or on the housing cover (108).

5. Oil filter arrangement according to claim 3 or 4, **characterised in that** the housing cover (108) or the covering (116) has cylindrical wall sections (126) extending at least partially along a circular circumference, said cylindrical wall sections having end faces which engage in an annular groove (116) formed on the covering (116) or on the housing cover (108).

6. Oil filter arrangement according to one of the preceding claims, **characterised in that** the handle-like section is formed as an elevation (128).

7. Oil filter arrangement according to one of the preceding claims, **characterised in that** the covering (116) is non-releasably connected to the filter element (106).

8. Oil filter arrangement according to one of the preceding claims, **characterised in that** the covering (116) has an annular web (120) on the side facing towards the filter element (106), said annular web encompassing the filter element (106) radially outwardly.

9. Oil filter arrangement according to one of the preceding claims, **characterised in that** provided on the base (142) of the housing (102) is an internal connecting piece (144) which comprises a cylindrical wall section and which extends into the accommodating chamber (104), and wherein the sealing of the lower end side of the filter element (106) against the accommodating chamber (104) is carried out with the aid of an annular disk section (134), which is adjoined, for sealing against the internal connecting piece of the housing, by a collar (138) covering the internal connecting piece (144) of the housing (102), wherein between the end face of the cylindrical wall section of the internal connecting piece (144) facing towards the accommodating chamber (104) and the collar (138), a ring seal (172) is provided.

10. Oil filter arrangement according to claim 9, **characterised in that** the covering (116) and/or the annular disk section (134) and the collar (138) adjacent thereto and/or a collapse protection provided in the interior of the filter element (106) are made of the same material.

11. Oil filter arrangement according to one of the preceding claims, **characterised in that** adjoining the accommodating chamber (104) in the housing (102), an overpressure valve is provided, which is oriented axially parallel to the filter element (106).

12. Oil filter arrangement according to claim 11, **characterised in that** the overpressure valve is weldable into an accommodating opening in the housing (102).

## Revendications

1. Système de filtre à huile, comportant un boîtier (102), qui contient un logement (104) pour un élément filtrant (106) à insérer dans le boîtier (102), et comportant un couvercle de boîtier (108), obturant le logement (104), l'élément filtrant (106) étant propre à être traversé dans la direction radiale par l'huile brute non filtrée et comportant sur sa face frontale inférieure, dans la position de montage, un orifice de sortie (148) pour l'huile filtrée, la face frontale inférieure de l'élément filtrant étant rendue étanche vis-à-vis du logement (104) et du boîtier (102), **caractérisé en ce que** toute la face frontale supérieure de l'élément filtrant (106) est rendue étanche vis-à-vis du logement (104) par un cache (116), réalisé du côté de l'élément filtrant séparément du couvercle (108), et **en ce qu'**une partie (128) en forme de poignée est prévue sur le côté (122) du cache (116), opposé à l'élément filtrant (106), et des éléments détalonnés (170) en forme de pattes sont prévus sur le côté du couvercle (108), orienté vers l'élément filtrant (106), de telle sorte que, au moment du dévissage du couvercle (108) du boîtier (102), les éléments détalonnés (170) saisissent par le bas la partie en forme de poignée (128) et l'entraînent dans la direction axiale, la partie en forme de poignée (128) pouvant être retirée latéralement hors de la zone des éléments détalonnés (170) une fois que l'élément filtrant (106) a été extrait du logement (104).

2. Système de filtre à huile selon la revendication 1, **caractérisé en ce que** l'élément filtrant (106) est fixé dans la direction axiale par l'appui du cache (116) contre le couvercle (108) et par l'appui contre le boîtier (102).

3. Système de filtre à huile selon la revendication 2, **caractérisé en ce que** des éléments intermédiaires, destinés à transmettre les forces d'appui axiales et/ou radiales, sont prévus sur le couvercle (108) et/ou sur le cache (116).

4. Système de filtre à huile selon la revendication 3, **caractérisé en ce que** respectivement le couvercle (108) et le cache (116) comportent des parties de positionnement et/ou de centrage, qui coopèrent avec des parties de positionnement et/ou de centrage complémentaires prévues respectivement sur le cache (116) et sur le couvercle (108).

5. Système de filtre à huile selon la revendication 3 ou 4, **caractérisé en ce que** respectivement le couvercle (108) et le cache (116) comportent des parties de paroi cylindriques (126), qui s'étendent au moins partiellement sur un pourtour circulaire et dont les faces frontales s'engagent dans une rainure annulaire (116) réalisée respectivement sur le cache (116) et sur le couvercle (108).

6. Système de filtre à huile selon l'une quelconque des revendications précédentes, **caractérisé en ce que** la partie en forme de poignée est réalisée sous forme de surélévation (128).

7. Système de filtre à huile selon l'une quelconque des revendications précédentes, **caractérisé en ce que** le cache (116) est assemblé de manière inamovible à l'élément filtrant (106).

8. Système de filtre à huile selon l'une quelconque des revendications précédentes, **caractérisé en ce que** le cache (116), sur le côté orienté vers l'élément filtrant (106), comporte une nervure annulaire (120) qui enserre radialement de l'extérieur l'élément filtrant (106).

9. Système de filtre à huile selon l'une quelconque des revendications précédentes, **caractérisé en ce que** sur le fond (142) du boîtier (102) est prévue une tubulure intérieure (144) qui est formée par un tronçon cylindrique et s'engage dans le logement (104), et l'étanchéité de la face frontale inférieure de l'élément filtrant (106) vis-à-vis du logement (104) étant assurée au moyen d'une partie en disque annulaire (134), qui est prolongée par un collet (138) recouvrant la tubulure intérieure (144) du boîtier (102) pour assurer l'étanchéité vis-à-vis de la tubulure intérieure du boîtier, un joint d'étanchéité annulaire (172) étant prévu entre la face frontale, orientée vers le logement (104), de la partie dé paroi cylindrique de la tubulure intérieure (144) et le collet (138).

10. Système de filtre à huile selon la revendication 9, **caractérisé en ce que** le cache (116) et/ou la partie en disque annulaire (134) et le collet (138) adjacent à celle-ci et/ou une protection de cartouche prévue à l'intérieur de l'élément filtrant (106) sont réalisés dans le même matériau.

11. Système de filtre à huile selon l'une quelconque des revendications précédentes, **caractérisé en ce que**, à proximité du logement (104) dans le boîtier (102), il est prévu une soupape de sûreté qui est orientée parallèlement à l'axe de l'élément filtrant (106).

12. Système de filtre à huile selon la revendication 11, **caractérisé en ce que** la soupape de sûreté peut être soudée à l'intérieur d'un orifice de réception dans le boîtier (102).
